# EUROPÄISCHE PATENTSCHRIFT

(11) **EP 1 246 865 B1**
(45) Veröffentlichungstag und Bekanntmachung des Hinweises auf die Patenterteilung: **27.01.2010**
(21) Anmeldenummer: 00982818.7
(22) Anmeldetag: 22.12.2000
(51) Int. Cl.: C08J 9/00, C08J 3/20, C08L 67/02

(54) **VERFAHREN ZUR HERSTELLUNG EINES MODIFIZIERTEN THERMOPLASTISCHEN POLYESTERHARZES UND SEINER GESCHÄUMTEN FORM**
METHOD FOR PRODUCING A MODIFIED THERMOPLASTIC POLYESTER RESIN AND A FOAM ON THE BASIS THEREOF
PROCEDE DE FABRICATION D'UNE RESINE POLYESTER THERMOPLASTIQUE MODIFIEE ET D'UNE MOUSSE A BASE DE CETTE RESINE

(30) Priorität: 11.01.2000 DE 10000712
(43) Veröffentlichungstag der Anmeldung: 09.10.2002
(73) Patentinhaber: Bühler AG, 9240 Uzwil (CH)
(72) Erfinder: CHRISTEL, Andreas, CH-9524 Zuzwil (CH)
(74) Vertreter: Wilming, Martin
(86) Internationale Anmeldenummer: PCT/CH2000/000687
(87) Internationale Veröffentlichungsnummer: WO 2001/051549

(56) Entgegenhaltungen:
- EP-A- 0 026 554
- EP-A- 0 309 800
- EP-A- 0 389 797
- EP-A- 0 406 010
- EP-A- 0 475 142
- WO-A-95/09884
- WO-A-97/15627
- US-A- 4 914 152
- US-A- 5 288 764
- US-A- 5 482 977
- PATENT ABSTRACTS OF JAPAN vol. 017, no. 478 (C-1104), 31. August 1993 (1993-08-31) -& JP 05 117501 A (KANEGAFUCHI CHEM IND CO LTD), 14. Mai 1993 (1993-05-14)
- DATABASE WPI Section Ch, Week 198707 Derwent Publications Ltd., London, GB; Class A23, AN 1987-046824 XP002163600 -& JP 62 004729 A (TEIJIN LTD), 10. Januar 1987 (1987-01-10)
- DATABASE WPI Section Ch, Week 199351 Derwent Publications Ltd., London, GB; Class A23, AN 1993-411027 XP002163601 -& JP 05 311053 A (TOYOBO KK), 22. November 1993 (1993-11-22)
- BARLOW, CHRIS ET AL.: ANNU. TECH. CONF.-SOC. PLAST. ENG., 56TH, 1998, Seiten 1944-1948, XP000992323
- DATABASE WPI Section Ch, Week 199633 Derwent Publications Ltd., London, GB; Class A23, AN 1996-329544 XP002163602 -& JP 08 151470 A (SEKISUI PLASTICS CO LTD), 11. Juni 1996 (1996-06-11)

## Beschreibung

Die vorliegende Erfindung betrifft ein Verfahren zur Herstellung eines modifizierten thermoplastischen Polyesterharzes und ein Verfahren zur Herstellung eines modifizierten Polyesterharzschaumes. Genauer betrifft sie PET-Material mit hoher Elastizität und Viskosität, das verwendbar ist, um einen Schaumstoff mit geringer Dichte herzustellen.

Im Schäumungsvorgang wird das Zellenwachstum oder die Zellenerweiterung in verschiedenen Stufen mit verschiedenen mathematischen Modellen erklärt. Im allgemeinen wird die Zellenerweiterung von den inneren Kräften in der Zelle, die die Erweiterung fördern, und den äusseren Kräften um die Zelle, die die Erweiterung begrenzen, kontrolliert. In Abhängigkeit sowohl vom Blasenwachstum als auch von der Blasenerweiterungsrate basieren die begrenzenden Kräfte hauptsächlich auf den viskosen oder den elastischen Eigenschaften des Polymers, das die Zelle umgibt.

Eine hohe Erweiterungsrate wird z.B. erzielt, wenn die Gasdiffusion in die wachsende Zelle hoch ist, verglichen mit der charakteristischen viskoelastischen Reaktion des Polymers. Dort "kann die Polymerstruktur nicht auf eine viskose Weise auf das diffundierende Schäumungsmittel reagieren, und das Massenpolymer scheint elastisch zu reagieren. Thermoplastic Foams, James L. Throne, Sherwood Publishers, Hinckley Ohio, 1996, Seite 289.

Obwohl die Verwendung eines Viskositätsverstärkers die viskoelastische Reaktion des Polymers erhöht, ist die elastische Reaktion des Massenpolymers immer noch vorherrschend in Situationen, in denen grosse Mengen des Schäumungsmittels erforderlich sind, um sehr niedrige Dichten zu erzielen. Die elastische Reaktion des Massenpolymers herrscht auch in Situationen vor, in denen Schäumungsmittel mit geringer Löslichkeit und hoher Diffusionsfähigkeit in der Polymerstruktur verwendet werden.

Eine weitere Wirkung der Verwendung von Viskositätsverstärkem in thermoplastischen Polyestern ist ihr negativer Einfluss auf die Elastizität des thermoplastischen Polyesters, wie in Messungen der Dehnviskosität oder des Rheotens gezeigt wird.

Die verringerte Elastizität verbunden mit der Erfordernis einer hochelastischen Reaktion unter dem Einfluss hoher Erweiterungsraten führt zu einer maximalen Erweiterungsrate, die in der bestimmten Polymerstruktur mit einem bestimmten Schäumungsmittel ohne den Bruch einer grossen Menge der wachsenden Zellen erzielt werden kann.

Es wurden verschiedene Versuche unternommen, um den Schäumungsprozess innerhalb dieser Beschränkungen zu optimieren.

So werden Schäumungsmittel mit Löslichkeitseigenschaften ähnlich den thermoplastischen Polyestern häufig entweder alleine oder in Gemischen verwendet, und es werden Verringerungen der Dichte von bis zu 15mal erzielt (EP 0 372 846 B1). Leider sind diese Schäumungsmittel entweder kettenförmige Kohlenwasserstoffe und bergen eine potentielle Feuer- und Explosionsgefahr in sich, oder Sie sind Halogenkohlenwasserstoffe, die umweltbedenklich sind.

Um noch tiefere Dichten zu erzielen, werden sekundäre oder sogar tertiäre Schritte vorgeschlagen (EP 0 442 759 B1).

Es wurde vorgeschlagen, die Schmelzeigenschaften von thermoplastischem Polyester zu verbessern, indem nur eine verhältnismässig kleine Menge an Viskositätsverstärker in einem Extrusionsschritt verwendet wird, gefolgt von einem Festphasenpolymerisationsschritt (WO 93/12164).

Die JP-A-H05-117501 beschreibt eine Harz-Zusammensetzung auf PET-Basis sowie ein Verfahren zur Herstellung von PET-Schaum unter Verwendung dieser Zusammensetzung. Es werden dem PET zugegeben ein Polyepoxid (z.B. Diglycidyl-Terephthalat) in einer Menge von 0.1-30 Gew.%, vorzugsweise mit 2-10 Gew.%, und ein lonomer-Harz, gebildet aus einem mono- bis trivalenten Metallion und einem Kopolymer aus einem Alpha-Olefin, vorzugsweise Ethylen, und einer ungesättigten Alpha-, Beta-Carbonsäure mit 3-8 C-Atomen in einer Menge von 1-30 Gew.%, vorzugsweise mit 5-10 Gew.%.

In der US 4,914,152 wird eine Polyesterharzzusammensetzung beschrieben, die eine verbesserte Verarbeitbarkeit und das Bereitstellen von Formkörpern mit verbesserter mechanischer Festigkeit, Streckfestigkeit und Wärmebeständigkeit aufweist. Die Zusammensetzung besteht aus einem thermoplastischen Polyester, wie Polyethylen-Terephthalat oder modifiziertes Polyethylen-Terephthalat, einem Polymer mit wenigsten einer Epoxygruppe pro Molekül und einem Elastizitäts-Modul von höchstens 10⁴ kg/cm² und aus einem Copolymer aus einem α-Olefin und einer α, βungesättigten Carbonsäure.

Dementsprechend ist es eine Aufgabe der Erfindung, ein Verfahren zur Herstellung eines modifizierten thermoplastischen Polyesterharzes, insbesondere PET mit hoher Elastizität und Viskosität zu schaffen.

Eine weitere Aufgabe der Erfindung besteht darin, thermoplastisches Polyesterharz (PET) mit hoher Elastizität und Viskosität herzustellten, das für die Bereitstellung eines Schaumes von geringer Dichte mit einem Edelgas als Treibmittel verwendbar ist.

Es ist eine weitere Aufgabe der Erfindung, ein Verfahren zur Herstellung eines thermoplastischen Polyesterharzschaumes mit geringer Dichte aus dem thermoplastischen Polyesterharz (PET) mit hoher Elastizität und Viskosität unter Verwendung eines Edelgases ohne die Notwendigkeit eines dazwischenliegenden Schrittes der Verbesserung oder eines sekundären Erweiterungsschrittes zu schaffen.

Noch eine weitere Aufgabe der Erfindung besteht in der Entwicklung eines mehrheitlich geschlossenzelligen Schaumes mit geringer Dichte, hergestellt unter Anwendung einer hohen Erweiterungsrate, und der allgemein für thermische Isolierungen, Lebensmittelbehälter usw. benutzt werden kann.

Eine weitere Aufgabe der Erfindung besteht in der Entwicklung eines Schaumes mit geringer Dichte, der eine weisse Farbe ohne die Hinzufügung eines Pigmentes aufweist.

Es ist weiterhin Aufgabe der Erfindung, ein Additivpaket zu schaffen, das im Verfahren zur Herstellung eines thermoplastischen Polyesterharzschaumes ohne die Notwendigkeit der Handhabung mehrfacher Zusätze verwendbar ist.

Diese Aufgaben werden gelöst durch ein Verfahren zur Herstellung eines modifizierten thermoptastischen Polyesterharzes mit den Merkmalen von Patentanspruch 1, durch ein modifiziertes thermoplastisches Polyesterharz mit den Merkmalen von Patentanspruch 19 und ein Verfahren zur Herstellung eines modifizierten thermoplastischen Poyesterharzschaumes mit den Merkmalen von Patentanspruch 31 gelöst, Vorteilhafte Weiterbildungen und Ausführungsformen der Verfahren und des Harzes gehen aus den von Patentanspruch 1, 19 oder 31 abhängigen Patentansprüchen hervor.

Es wurde festgestellt, dass die Verwendung eines Elastizilätsverstärkers, der vorzugsweise zum Massenpolymer reagiert, für ein thermoplastisches Polyester, das einen Viskositätsverstärker enthält, ausreichend Elastizität bereitstellt, um ein mit Schäumungsmitteln und Schäumungsmittelkonzentrationen zu ermöglichen, die sehr hohe Erweiterungsraten hervorrufen, und der es deshalb ermöglicht, grosse Mengen an Edelgasen zu verwenden, um insbesondere PET-Schäume mit geringer Dichte zu erzielen.

Das elastizitätsvarstärkende Additiv ist ein elastomerisches Polyolefin-Kopolymer, das durchschnittlich pro Polymerkette zwei oder mehrere reaktive funktionelle Gruppen enthält und in einer Menge von 0,3 bis 30 Gew.-% verwendet wird.

Diese reaktiven funktionellen Gruppen umfassen vorzugsweise Anhydrid-, Epoxid-, Carboxyl- oder Hydroxygruppen_{.}

Die funktionellen Gruppen können auf jedes elastomerische Polymer gepfropft werden oder zusammen mit den Monomeren des elastomerischen Polymers kopolymerisiert werden.

In der vorliegenden Erfindung werden elastomerische Polyolefin-Kopolymer verwendet von
(a) Alkenmonomeren, die 1 bis 6 Kohlenstoffatome, besonders Ethan mit einem oder mehreren der folgenden Komonomere enthalten
(b) Vinylazetat,
   Alkylakrylat oder Methakrylat, besonders Methylakrylat oder Butylakrylat, Akrylsäuren oder Methakrylsäure.
   Maleinsäure,
   Monomere, die Epoxidgruppen enthalten, besonders Glycidylgruppen,
   Monomere, die Anhydridgruppen enthalten, besonders Maleinsäureanhydridgruppen.

Diese elastomerischen Polyolefin-Kopolymere weisen einen Komonomergehalt (b) von 20 bis 40 % auf sowie ein Biegemodul unter 30.000 psi (=207 MPa), eine Biegungstemperatur bei 66 psi unter 100 °F (38 °C) und eine Reissdehnung von mehr als 300 %.

Beispiele der besonders bevorzugten elastomerischen Polyolefin-Kopolymere sind:
Ethylenvinylazetat
Ethylenmethylakrylat-Glycidylmethakrylat
Ethylenbutylakrylat-Glycidylmethakrylat
Ethylenakrylsäure
Ethylenmethylakrylat-Maleinsäureanhydrid

Die Erfindung schafft ein Verfahren zur Herstellung eines modifizierten thermoplastischen Polyesterharzes, das die Schritte der Beschickung und des Schmelzens eines thermoplastischen Polyesterharzes, der Beschickung eines Kettenaufbauadditives, der Beschickung eines elastizitätsverstärkenden Additives und der Mischung und des Knetens des thermoplastischen Polyesterharzes mit dem Ketienaufbauadditiv und dem elastizitätsverstärkenden Additiv umfasst. Vorzugsweise wird ein gekömtes Additivpaket verwendet, das das Kettenaufbauadditiv und das elastizitätsverstärkende Additiv enthält.

Ein solches modifiziertes thermoplastisches Polyesterharz enthält 55 bis 99,65 Gew.% eines thermoplastischen Polyesterharzes, 0.05 bis 5 Gew.% eines Kettenaufbauadditives und 0,3 bis 30 Gew.% eines elastizitätsverstärkenden Additives.

Gegenstände, die aus dem modifizierten thermoplastischen Polyesterharz hergestellt sind, werden vorzugsweise, aber nicht einschränkend durch Flachfollenextrusion, Extrusionsschäumung, Extrusionsblasverfahren, Extrusionsfolienblasen oder Preformspritzguss produziert. Diese Artikel weisen eine weisse Farbe auf, die auf die Verwendung des elastizitätsverstärkenden Additives zurückzuführen ist. Ausserdem schafft die Erfindung ein Verfahren zur Herstellung eines modifizierten thermoplastischen Polyesterharzschaumes, umfassend die Schritte der Beschickung und des Schmelzens eines thermoplastischen Polyesterharzes, der Mischung des Harzes mit einem Treibmittel und der Extrusion der Mischung in einen Bereich mit geringerem Druck, um die Schäumung auszuführen, **dadurch gekennzeichnet, dass** sowohl ein Kettenaufbauadditiv als auch ein elastizitätsverstärkendes Additiv zum thermoplastischen Polyester hinzugefügt, damit gemischt und geknetet werden. Das Verfahren wird in einem ersten und einem zweiten Extruder ausgeführt, oder in einem ersten Extruder, der mit einer statischen Mischvorrichtung verbunden ist. Der erste Extruder ist ein Doppelwellen- oder Mehrwellenextruder.

Gegenstände, die aus modifiziertem thermoplastischen Polyesterharz geschäumt sind, mit einer Dichte unter 80 kg/m³ sind besonders verwendbar, aber nicht beschränkt auf thermische Isolierung und Lebensmittelbehälter usw. Gegenstände, die aus modifiziertem thermoplastischen Polyester geschäumt sind, umfassen eine Hautschicht, die entweder auf eine oder auf beide Seiten des geschäumten Gegenstandes laminiert oder koextrudiert ist.

Die Erfindung wird nachfolgend in Ausführungsbeispielen anhand einer Zeichnung näher beschrieben. In der Zeichnung zeigen die
- Fig. 1:: eine schematische Schnittansicht einer Vorrichtung zur Herstellung von mo- difiziertem PET gemäss der Erfindung;

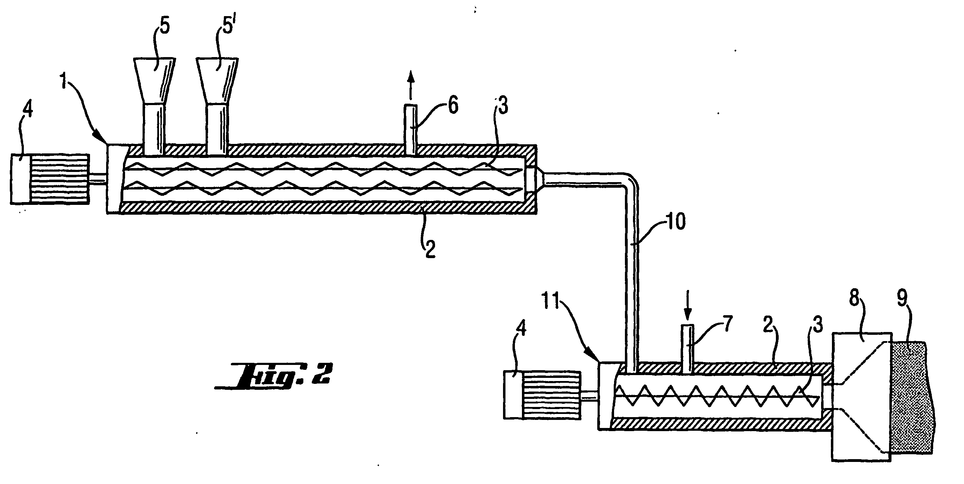

- Fig. 2:: eine schematische Schnittansicht weiterer Vorrichtungen zur Herstellung von modifiziertem PET und/oder Schaum gemäss der Erfindung, und

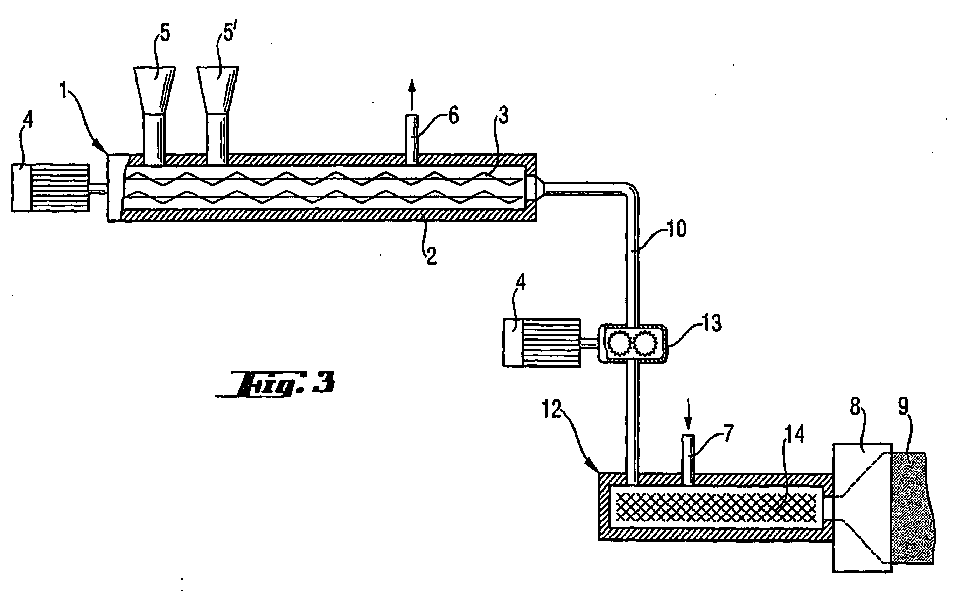

- Fig. 3:: eine Schnittansicht eines anderen Ausführungsbeispiels der Erfindung
- Fig. 4:: Schaumzellen.

Polyester, wie durch Polyethylen-Terephtalat (PET) und Polybuten-Terephtalat (PBT) sowie durch Polyester-Kopolymere und Polyestergemische mit z.B. Polycarbonat (PBT/PC) veranschaulicht wird, sind wichtige thermoplastische Kunststoffe, die zur Gruppe der technischen Kunststoffe gehören. Teilweise kristalline Polyester werden zum Injektionsguss von Verbindungen verwendet und weisen eine grosse Stärke und Steifigkeit, eine hohe Dimensionsstabilität und gute Verschleisseigenschaften auf. Formlose Polyester weisen eine hohe Transparenz, eine grosse Widerstandsfähigkeit und eine sehr gute Beständigkeit gegen Spannungsrisse auf und können zu hohlen Gegenständen verarbeitet werden.

Besonders geeignete Polyester sind PET, PBT und entsprechende Kopolymere und Gemische, wie durch PBT/PC, PBT/ASA, PBT/ABS, PET/ABS, PET/PC oder auch PBT/PET/PC oder PBT/PC/ABS veranschaulicht wird, die überwiegend die angegebenen Polyester enthalten.

Das am meisten bevorzugte Polyester ist das formlose PET, das zur Herstellung von thermischen Isolierungen und Lebensmittelbehältern usw. benutzt wird. Eine weitere bevorzugte Form umfasst die wiederaufbereiteten Polyester, die ihren Ursprung in Haus- und Industrieabfällen oder gesammelten Wertstoffen, in Produktionsabfällen oder von Behältern mit Pflichtpfand haben. Was die chemische Zusammensetzung von wiederaufbereiteten Polyestern betrifft, gelten ebenfalls die oben angegebenen Einzelheiten. Wiederaufbereitete PET und PBT werden in diesem Fall ebenfalls bevorzugt.

Die Polyester, d.h. Polyester wie auch wiederaufbereitete Polyester, können sowohl Homopolyester als auch Kopolyester sein, die von aliphatischen, zykloaliphatischen oder aromatischen Dicarbonsäuren und Diolen oder Hydroxycarbonsäuren abgeleitet werden. Ausserdem sind Gemische dieser Polyester geeignet. Ihre Zusammensetzung hängt im wesentlichen von den für eine spezifische Endbenutzung gewünschten Eigenschaften ab.

Die aliphatischen Dicarbonsäuren können von 2 bis 40 Kohlenstoffatome, die zykloaliphatischen Dicarbonsäuren von 6 bis 10 Kohlenstoffatome, die aromatischen Dicarbonsäuren von 8 bis 14 Kohlenstoffatome, die aliphatischen Hydroxycarbonsäuren von 2 - 12 Kohlenstoffatome und die aromatischen und die zykloaliphatischen Hydroxycarbonsäuren von 7 bis 14 Kohlenstoffatome umfassen.

Die aliphatischen Diolen können von 2 bis 12 Kohlenstoffatome, die zykloaliphatischen Diolen von 5 bis 8 Kohlenstoffatome und die aromatischen Diolen von 6 bis 16 Kohlenstoffatome umfassen.

Unter aromatischen Diolen werden diejenigen verstanden, in denen zwei Hydroxygruppen an eine oder an mehrere aromatische Kohlenwasserstoffradikale gebunden sind.

Bevorzugte Diolen sind die Alkylendiolen, 1,4-Dihydroxyzyklohexan und 1,4-Bis(hydroxymethyl)zyklohexan. Ethylenglykol und 1,4-Butandiol werden besonders bevorzugt.

Weitere geeignete aliphatische Diolen sind die β-hydroxyethylierten, vorzugsweise die β-hydroxyethylierten Bisphenole, wie durch 2,2-Bis[4-(β-hydroxyethoxy)phenyl]propan veranschaulicht.

Geeignete aromatische Diole sind mononukleare Diphenole und, vorzugsweise dinukleare Diphenole, die an jedem aromatischen Kern eine Hydroxygruppe tragen.

Modifiziertes PET-Material mit hoher Elastizität und Viskosität ist nützlich, um einen Schaum mit geringer Dichte mit einem Edelgas als Treibmittel herzustellen. Als Treibmittel können beispielsweise chemische Treibmittel verwendet werden. Als chemische Treibmittel kommen beispielsweise stickstoffabspaltende Treibmittel, wie AzoVerbindungen und dabei insbesondere Azodicarbonamid oder Barium-azodicarbonat, Hydrazine, wie Diphenylsulfon-3,3-dusulfohydrazid:4,4-Oxybis-(benzol-sulfohydrazid): Trihydrazinotriazin oder Acrylbis(sulfonydrazid) oder Semicarbazide, wie p-Toluylensulfonyl-semicarbazid oder 4,4-Oxybis-(benzol-sulfonyl-semicarbazid) oder Tetrazole wie 5-Penyl-tetrazol in Frage. Es ist auch möglich, physikalische Treibmittel aus, der Reihe der verdichteten oder verflüssigten Gase anzuwenden, wie beispielsweise Luft, Stickstoff, CO₂, Fluor-Chlor-Kohlenwasserstoffe, Kohlenwasserstoffe, beispielsweise der Reihe Methan, Aethan, Butan oder Propan oder Gemische davon.

Das Verfahren zur Herstellung eines modifizierten thermoplastischen Polyesterharzes wird in einem ersten Ausführungsbeispiel in einem Extruder 1 ausgeführt, der ein Gehäuse 2, zwei oder mehrere Wellen 3, eine Steuerung 4, mindestens eine Beschikkungsvorrichtung 5 für PET und möglicherweise mindestens eine Druckbeschickungsöffnung 5' für Zusätze und eine Austrittsöffnung 6 für die Verbindung mit einem Vakuumsystem umfasst. Das thermoplastische Polyesterharz (PET) wird durch die Beschickungsvorrichtung 5 und die Zusätze werden durch die Beschickungsvorrichtung 5 und/oder die Druckbeschickungsöffnung 5' in den Extruder eingeführt und werden miteinander gemischt, plastifiziert und geschmolzen. In der weiteren Zone des Extruders, zwischen den Öffnungen 5, 5' und 6 erfolgt die reaktive Extrusion, in der die Kettenverlängerung und -verzweigung des Polyesters einsetzt, wobei flüchtige Substanzen im Harz durch Evakuierung und Saugen von einer Ausgangsöffnung 6 entfernt werden. Es wird bevorzugt, das frisches PET und wiederaufbereitetes Material und Zusätze unabhängig voneinander in gleichbleibenden Mengen zu beschicken. Das PET und die Zusätze können aber vorgemischt und von einer gleichbleibenden Beschickungsvorrichtung 5 bereitgestellt werden. Der Schritt der Mischung und des Knetens wird in einem Doppelwellen- oder Mehrwellenextruder 1 ausgeführt.

Das Verfahren zur Herstellung eines modifizierten thermoplastischen Polyesterharzes, umfasst die Schritte der Beschickung und des Schmelzens eines thermoplastischen Polyesterharzes, der Beschickung eines Kettenaufbauadditives und der Beschickung eines elastizitätsverstärkenden Additives und der Mischung und des Knetens des thermoplastischen Polyesterharzes mit dem Kettenaufbauadditiv und dem elastizitätsverstärkenden Additiv. Die Zugabe von Additiven, welche Kettenverlängerungen, - verzweigungen und eventuell -vernetzungen bewirken, verändert soweit die Eigenschaften von PET, dass sich das Material mit chemischen und physikalischen Treibmitteln schäumen lässt. Bei diesen Modifikationen erhöht sich auch die intrinsische Viskosität des Materials, das Ziel der Modifikationen ist aber in jedem Fall, die Schmelzviskosität und die Schmelzstabilität zu erhöhen.

Das Verfahren wird unter Bedingungen ausgeführt, unter denen zwischen dem thermoplastischen Polyester und dem Kettenaufbauadditiv eine Reaktion stattfindet.

Das Verfahren wird unter Bedingungen ausgeführt, unter denen zwischen dem thermoplastischen Polyester und dem elastizitätsverstärkenden Additiv eine Reaktion stattfindet und/oder unter denen zwischen dem thermoplastischen Polyester und dem Kettenaufbauadditiv und zwischen dem Kettenaufbauadditiv und dem elastizitätsverstärkenden Additiv eine Reaktion stattfindet.

Das thermoplastische Polyesterharz ist ein Polyethylen-Terephtalat, ein Polybuten-Terephtalat oder ein Gemisch davon.

Für das thermoplastische Polyesterharz wird ein frisches Material, ein teilweise oder ein zu 100 % wiederaufbereitetes Material benutzt.

Das Kettenaufbauadditiv weist zwei oder mehrere funktionelle Gruppen auf, vorzugsweise, aber nicht beschränkt auf Anhydrid, Epoxid- oder Oxazolingruppen, und wird in einer Menge von 0,05 bis 5 Gew.% verwendet.

Das Kettenaufbauadditiv weist zwei oder mehrere funktionelle Gruppen auf, vorzugsweise, aber nicht beschränkt auf Anhydrid, Epoxid- oder Oxazolingruppen, und wird vorzugsweise in einer Menge von 0,2 bis 1 Gew.% verwendet.

Das elastizitätsverstärkende Additiv ist ein elastomerisches Polyolefin-Kopolymer, das durchschnittlich pro Polymerkette zwei oder mehrere funktionelle Gruppen umfasst, vorzugsweise, aber nicht beschränkt auf Anhydrid-, Epoxid-, Carboxyl- oder Hydroxygruppen, und das in einer Menge von 0,3 bis 30 Gew.% verwendet wird.

Das elastizitätsverstärkende Additiv ist ein elastomerisches Polyolefin-Kopolymer, das durchschnittlich pro Polymerkette zwei oder mehrere funktionelle Gruppen umfasst, vorzugsweise, aber nicht beschränkt auf Anhydrid-, Epoxid-, Carboxyl- oder Hydroxygruppen, und das vorzugsweise in einer Menge von 5 bis 15 Gew.% verwendet wird.

Ausserdem werden zusätzliche Additive zugegeben, vorzugsweise, aber nicht beschränkt auf nukleierende Mittel, Stabilisatoren, Pigmente und/oder Schlagzähigkeitsmodifikatoren.

Gemäss dem Verfahren wird ein gekörntes Additivpaket verwendet, das das Kettenaufbauadditiv und das elastizitätsverstärkende Additiv enthält und/oder das Kettenaufbauadditiv, das elastizitätsverstärkende Additiv und zusätzliche Additive enthält.

Gemäss dem Verfahren werden die Additive gleichmässig im gekörnten Additivpaket verteilt.

Mehrere zähflüssige oder pulverförmige z.T. giftige Additive sind schwer zu dosieren und sicher zu handhaben. Die Einarbeitung eines Kettenaufbauadditives (viscosity enhancing additive) in Elastizitätsverbesserer in einem Additivpaket erlaubt eine Dosierung von Granulat. Erfindungsgemäss werden als Mittel zum Aufbau von Molmassen beispielsweise reaktive Kettenverlängerer aus der Reihe der Bis-2-oxazoline, der carboxylreaktiven oder anhydridreaktiven Reagentien, wie Polyacyllactame, Bisacyllactme und pyromellitischen Säuren und Anhydriden, der Polyole, wie Pentaerthritol und Trimethylolpropan oder der Polyepoxide, wie 4-Glycidyloxy-N,N'-diglycidanilin oder Tertraglycidyldiaminophenylmethan verwendet.

Die Menge des einzusetzenden Mittels zum Aufbau der Molmassen richtet sich nach der Anzahl der reaktiven Endgruppen im Polyester. Zweckmässig ist ein 2 - 2,5facher molarer Überschuss. In der Praxis ist die Anwendung von 0,1 bis 5 Gew.% an Mittel, zum Aufbau von Molmassen, bezogen auf den Polyester, vorteilhaft.

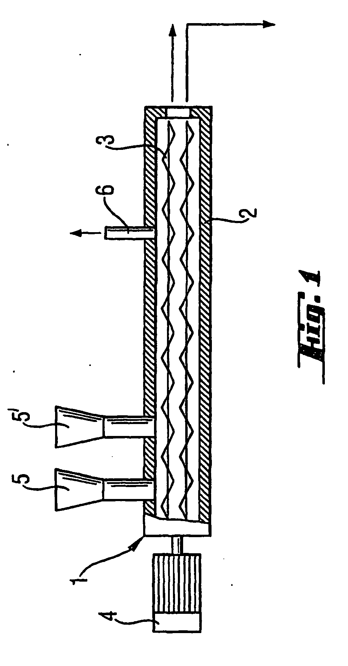

Gemäss dem Verfahren wird das geschmolzene Harz evakuiert, wie am rechten Ende des Extruders 1 in Fig. 1 gezeigt wird.

Gemäss dem Verfahren wird das geschmolzene Harz gekühlt und gekörnt und gegebenenfalls kristallisiert.

Gemäss dem Verfahren wird das geschmolzene Harz in einen sekundären Vorgang übertragen, vorzugsweise, aber nicht beschränkt auf einen Schäumungsvorgang.

Ein modifiziertes thermoplastisches Polyesterharz, das den Extruder 1 verlässt, umfasst 55 bis 99,65 Gew.% eines thermoplastischen Polyesterharzes, 0,05 bis 5 Gew.% eines Kettenaufbauadditives und 0,3 bis 30 Gew.% eines elastizitätsverstärkenden Additives:
Modifiziertes thermoplastisches Polyesterharz, worin mindestens ein Teil des Kettenaufbauadditives zum thermoplastischen Polyesterharz reagiert.
Modifiziertes thermoplastisches Polyesterharz, worin mindestens ein Teil des elastizitätsverstärkenden Additives zum thermoplastischen Polyesterharz reagiert.
Modifiziertes thermoplastisches Polyesterharz, worin mindestens ein Teil des Kettenaufbauadditives zum thermoplastischen Polyesterharz reagiert und worin mindestens ein Teil des Kettenaufbauadditives zum elastizitätsverstärkenden Additiv reagiert.
Modifiziertes thermoplastisches Polyesterharz, worin das thermoplastische Polyesterharz ein Polyethylen-Terephtalat, ein Kopolymer eines Polyethylen-Terephtalats, ein Polybuten-Terephtalat oder ein Gemisch davon ist.
Modifiziertes thermoplastisches Polyesterharz, worin für das thermoplastische Polyesterharz ein rohes Material, ein teilweise oder ein zu 100 % wiederaufbereitetes Material benutzt wird.
Modifiziertes thermoplastisches Polyesterharz, worin das Kettenaufbauadditiv zwei oder mehrere funktionelle Gruppen umfasst, vorzugsweise, aber nicht beschränkt auf Anhydrid-, Epoxid- oder Oxazolingruppen, und das in einer Menge von 0,05 bis 5 Gew.% verwendet wird.
Modifiziertes thermoplastisches Polyesterharz, worin das Kettenaufbauadditiv zwei oder mehrere funktionelle Gruppen umfasst, vorzugsweise, aber nicht beschränkt auf Anhydrid, Epoxid- oder Oxazolingruppen, und das vorzugsweise in einer Menge von 0,2 bis 1 Gew.% verwendet wird.
Modifiziertes thermoplastisches Polyesterharz, worin das elastizitätsverstärkende Additiv ein elastomerisches Polyolefin-Kopolymer ist, das durchschnittlich pro Polymerkette zwei oder mehrere funktionelle Gruppen umfasst, vorzugsweise, aber nicht beschränkt auf Anhydrid-, Epoxid-, Carboxyl- oder Hydroxygruppen, und das in einer Menge von 0,3 bis 30 Gew.% verwendet wird.
Modifiziertes thermoplastisches Polyesterharz, worin das elastizitätsverstärkende Additiv ein elastomerisches Polyolefin-Kopolymer ist, das durchschnittlich pro Polymerkette zwei oder mehrere funktionelle Gruppen umfasst, vorzugsweise, aber nicht beschränkt auf Anhydrid-, Epoxid-, Carboxyl- oder Hydroxygruppen, und das vorzugsweise in einer Menge von 5 bis 15 Gew.% verwendet wird.
Modifiziertes thermoplastisches Polyesterharz, worin zusätzliche Additive zugegeben werden, vorzugsweise, aber nicht beschränkt auf nukleierende Mittel, Stabilisatoren, Pigmente und/oder Schlagzähigkeitsmodifikatoren.

Gegenstände, die aus dem modifizierten thermoplastischen Polyesterharz hergestellt sind, werden vorzugsweise, aber nicht einschränkend durch Flachfolienextrusion, Extrusionsschäumung, Extrusionsblasverfahren, Extrusionsfollenblasen oder Preformspritzguss produziert.

Gegenstände, die aus dem modifizierten thermoplastischen Polyesterharz hergestellt sind, können eine weisse Farbe aufweisen, die auf die Verwendung des elastizitätsverstärkenden Additives zurückzuführen ist.

Das Verfahren zur Herstellung eines thermoplastischen Polyesterharzschaumes wird in einem zweiten Auführungsbeispiel in einem ersten Extruder 1 und einem zweiten Extruder 11 durchgeführt, worin der zweite Extruder 11 mindestens eine Treibmittelbeschickungsöffnung 7 und eine Düse 8 in verschiedenen Konfigurationen zur Herstellung eines Schaumes 9 umfasst. Weitere gewöhnliche Ausrüstung wird nicht gezeigt. Die Kettenverlängerung und Kettenverzweigung erfolgt im wesentlichen im Extruder 1. Die Lösung des Treibmittels, der Druckaufbau sowie die Einstellung der gewünschten Schmelztemperatur für die Schäumung erfolgt im Extruder 11. Der erste Extruder 1 ist mit dem zweiten Extruder 11 durch ein Verbindungsrohr 10 verbunden.

Möglich sind folgende Verfahrensvarianten:

Verfahren zur Herstellung eines modifizierten thermoplastischen Polyesterharzschaumes, umfassend die Schritte der Beschickung und des Schmelzens eines thermoplastischen Polyesterharzes, der Mischung des Harzes mit einem Treibmittel, der Extrusion der Mischung in einen Bereich mit geringerem Druck, um die Schäumung auszuführen, worin sowohl ein Kettenaufbauadditiv und ein elastizitätsverstärkendes Additiv dem thermoplastischen Polyester beigegeben und damit gemischt und geknetet werden.

Verfahren zur Herstellung eines modifizierten thermoplastischen Polyesterharzschaumes, worin der Schritt der Mischung und des Knetens unter Bedingungen ausgeführt wird, unter denen zwischen dem thermoplastischen Polyester und dem Kettenaufbauadditiv und zwischen dem thermoplastischen Polyester und dem elastizitätsverstärkenden Additiv eine Reaktion stattfindet.

Verfahren zur Herstellung eines modifizierten thermoplastischen Polyesterharzschaumes, worin der Schritt der Mischung und des Knetens unter Bedingungen ausgeführt wird, unter denen zwischen dem thermoplastischen Polyester und dem Kettenaufbauadditiv und zwischen dem Kettenaufbauadditiv und dem elastizitätsverstärkenden Additiv eine Reaktion stattfindet.

Verfahren zur Herstellung eines modifizierten thermoplastischen Polyesterharzschaumes, worin das thermoplastische Polyesterharz ein Polyethylen-Terephtalat, ein Kopolymer eines Polyethylen-Terephtalats, ein Polybuten-Terephtalat oder ein Gemisch davon ist.

Verfahren zur Herstellung eines modifizierten thermoplastischen Polyesterharzschaumes, worin für das thermoplastische Polyesterharz ein rohes Material, ein teilweise oder ein zu 100 % wiederaufbereitetes Material benutzt wird.

Verfahren zur Herstellung eines modifizierten thermoplastischen Polyesterharzschaumes, worin das Kettenaufbauadditiv zwei oder mehrere funktionelle Gruppen umfasst, vorzugsweise, aber nicht beschränkt auf Anhydrid, Epoxid- oder Oxazolingruppen, und das in einer Menge von 0,05 bis 5 Gew.% verwendet wird.

Verfahren zur Herstellung eines modifizierten thermoplastischen Polyesterharzschaumes, worin das Kettenaufbauadditiv zwei oder mehrere funktionelle Gruppen umfasst, vorzugsweise, aber nicht beschränkt auf Anhydrid, Epoxid- oder Oxazolingruppen, und das vorzugsweise in einer Menge von 0,2 bis 1 Gew.% verwendet wird.

Verfahren zur Herstellung eines modifizierten thermoplastischen Polyesterharzschaumes, worin das elastizitätsverstärkende Additiv ein elastomerisches Polyolefin-Kopolymer ist, das durchschnittlich pro Polymerkette zwei oder mehrere funktionelle Gruppen enthält, vorzugsweise, aber nicht beschränkt auf Anhydrid, Epoxid-, Carboxyl- oder Hydroxygruppen, und das in einer Menge von 0,3 bis 30 Gew.% verwendet wird.

Verfahren zur Herstellung eines modifizierten thermoplastischen Polyesterharzschaumes, worin das elastizitätsverstärkende Additiv ein elastomerisches Polyolefin-Kopolymer ist, das durchschnittlich pro Polymerkette zwei oder mehrere funktionelle Gruppen enthält, vorzugsweise, aber nicht beschränkt auf Anhydrid, Epoxid-, Carboxyl- oder Hydroxygruppen, und das vorzugsweise in einer Menge von 5 bis 15 Gew.% verwendet wird.

Verfahren zur Herstellung eines modifizierten thermoplastischen Polyesterharzschaumes, worin zusätzliche Additive zugegeben werden, vorzugsweise, aber nicht beschränkt auf nukleierende Mittel, Stabilisatoren, Pigmente und/oder Schlagzähigkeitsmodifikatoren.

Verfahren zur Herstellung eines modifizierten thermoplastischen Polyesterharzschaumes, worin ein Treibmittel von geringer Löslichkeit und/oder hoher Diffusionsfähigkeit verwendet werden kann, vorzugsweise, aber nicht beschränkt auf CO₂ oder N₂.

Verfahren zur Herstellung eines modifizierten thermoplastischen Polyesterharzschaumes, worin das Treibmittel in das geschmolzene Harz injiziert wird.

Verfahren zur Herstellung eines modifizierten thermoplastischen Polyesterharzschaumes, worin das geschmolzene Harz vor der Injektion des Treibmittels evakuiert wird.

Verfahren zur Herstellung eines modifizierten thermoplastischen Polyesterharzschaumes, worin die Schäumung zu einer hohen Dichtereduktion ausgeführt wird, vorzugsweise, aber nicht beschränkt auf mehr als 15 mal.

Verfahren zur Herstellung eines modifizierten thermoplastischen Polyesterharzschaumes, worin die Schäumung zu einer hohen Dichtereduktion ausgeführt wird, besonders grösser als 25 mal.

Eine weitere Ausführungsform des Verfahrens besteht in der Serienschaltung eines Zwei-oder-Mehrwellen-Misch- und Reaktionsextruders 1 mit einer Schmelzkühlung 13 und einer statischen Mischvorrichtung 14. Dabei findet die Kettenverlängerung und Kettenverzweigung im wesentlichen im Extruder 1 statt. Mit der Schmelzkühlung 13 wird der zur Lösung des Treibmittels erforderliche Druck aufgebaut. In der Mischstrekke 12, 14 erfolgt die Homogenisierung der Treibrnittel-Polymer-Lösung sowie die Einstellung der gewünschten Schmelztemperatur für die Schäumung.

Möglich sind insbesondere die Verfahrensvarianten:

Verfahren zur Herstellung eines modifizierten thermoplastischen Polyesterharzschaumes, ausgeführt von einem ersten und einem zweiten Extruder 1, 11 oder von einem ersten Extruder 1, verbunden mit einer statischen Mischvorrichtung 14.

Verfahren zur Herstellung eines modifizierten thermoplastischen Polyesterharzschaumes, worin der erste Extruder 1 ein Doppelzellen- oder Mehrwellenextruder ist.

Verfahren zur Herstellung eines modifizierten thermoplastischen Polyesterharzschaumes, worin eine Übertragungslinie 10 bereitgestellt wird.

Die Gegenstände, die aus modifiziertem thermoplastischen Polyesterharz geschäumt sind, werden gemäss dem Verfahren der Erfindung hergestellt und weisen eine Dichte von unter 80 kg/m³ auf und sind besonders nützlich für, aber nicht beschränkt auf thermische Isolierung und Lebensmittelbehälter usw.

Gegenstände, die aus modifiziertem thermoplastischen Polyester geschäumt sind, worin eine Hautschicht auf entweder eine oder auf beide Seiten des geschäumten Gegenstandes laminiert oder koextrudiert ist.

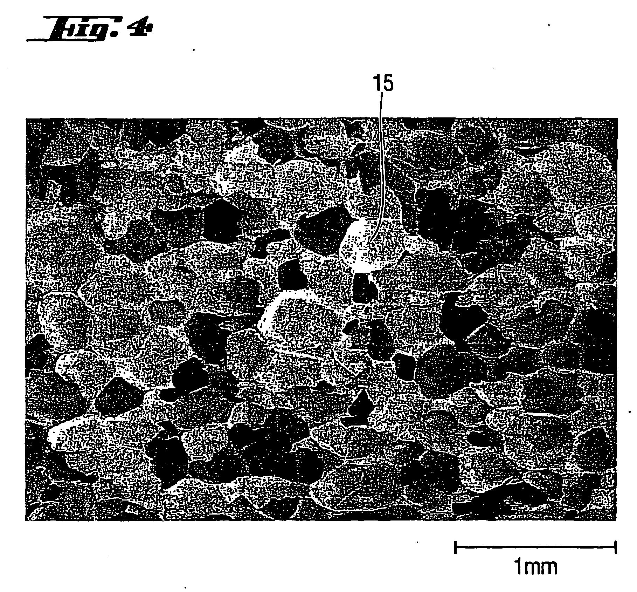

Fig. 4 zeigt die Schaumzellen 15, die gemäss den vorliegenden Verfahren hergestellt sind.

Durchgeführte Experimente:

Auf einem 63mm 30 L/D Zweiwellenextruder wurde ein handelsübliches Flaschengranulat Bripet 1000 mit einem IV Wert von 0.8 alleine und in Verbindung mit reaktiven Additiven extrudiert und anschliessend in einer Strangranulationseinrichtung granuliert. Das PET Material war während mindestens 5 Stunden bei 165°C vorgetrocknet worden. Gegen Ende der Extrusionszone wurde eine Schmelzeentgasung im Vakuum bei -850 mbar vorgenommen. Die Gehäusetemperaturen im Schmelzebereich waren auf 290°C eingestellt. Es wurde ein Durchsatz von 100kg/h bei einer Drehzahl von 200 Umdrehungen pro Minute erreicht.

Anschliessend wurden durch Rheotensmessungen sowohl die Schmelzefestigkeit, wie auch die Schmeizeelastizität bestimmt, wobei die Abzugskraft als indirekte Messgrösse der Schmelzefestigkeit und die Abzugsrate als indirekte Messgrösse der Schmelzeelastizität erachtet wird.

Als reaktive Additive wurden PMDA und ein vierfunktionales Epoxy Harz MY721 (epoxy) als viskositätserhöhende Additive, sowie ein Ethylen-Acrylsäureester-Glycidyl-Methacrylat Terpolymer (mPE) als elastizitätserhöhendes Additiv verwendet.

Einstellungen Rheotens Mesungen:
- Zylinder:: 15 mm Durchmesser, beheizt auf 260°C
- Düse:: 10 mm lang, 2 mm Durchmesser
- Abzugsvorrichtung:: Abstand 100 mm, gezahnte Abzugswalzen Beschleunigung 12 mm/Sek^2, Maximalgeschwindigkeit 1200 mm/Sek.
- va:: Abzugsgeschwindigkeit bei Strangriss
- v0:: DOsenaustrittsgeschwindigkeit

### Messungen bei 0.2 mm/Sek Stempetgeschwindigkeit:

| | PET | Epoxy | mPE | | Abzugskraft g | Abzugsfaktor va/vO |
|---|---|---|---|---|---|---|
| Versuch 1 | 100 | | | | 0.6 | 51 |
| Versuch 2 | 99.88 | 0.12 | | | 0.9 | 51 |
| Versuch 3 | 99.75 | 0.25 | | | 8.5 | 26 |
| Versuch 4 | 89.89 | 0.11 | 10 | | 1.1 | 107* |

### Messungen bei 0.5 mm/Sek Stempelgeschwindigkeit:

| | PET | PMDA | mPE | | Abzugskraft g | Abzugsfaktor va/vO |
|---|---|---|---|---|---|---|
| Versuch 5 | 100 | | | | 0.6 | 21 |
| Versuch 6 | 99.55 | 0.45 | | | 16.4 | 5 |
| Versuch 7 | 99.44 | 0.56 | | | 67.2 | 3 |
| Versuch 8 | 89.55 | 0.45 | 10 | | 4.0 | 43* |

| | | | | | | |
|---|---|---|---|---|---|---|
| * Maximale Abzugsgeschwindigkeit ohne Strangriss erreicht | | | | | | |

Aus den Versuchen 1-3 sowie und 5-7 ist ersichtlich, dass durch zunehmende Zugabe eines viskositätserhöhenden Additives die Abzugskraft und somit die Schmelzefestigkeit deutlich zunimmt, gleichzeitig aber auch der Abzugsfaktor und somit die Schmelzeelastizität stark sinkt.

Ein anderes Bild ergibt sich aus dem Vergleich der Versuche 1 und 4 sowie 5 und 8. Durch den Einsatz des elastizitätserhöhenden Additives in Kombination mit dem viskositätserhöhenden Additiv lässt sich der Abzugsfaktor und somit die Schmelzeelastizität weiter erhöhen, gleichzeitig zu einer Erhöhung der Abzugskraft und somit der Schmelzefestigkeit.

## Patentansprüche

1. Verfahren zur Herstellung eines modifizierten thermoplastischen Polyesterharzes, umfassend das
➢ Zuführen und Schmelzen eines thermoplastischen Polyesterharzes, das
➢ Zuführten eines Kettenaufbauadditives und das
➢ Zuführen eines elastizitätsverstärkenden Additivs, gefolgt von einem
➢ Mischen und Kneten des thermoplastischen Polyesterharzes mit dem Kettenaufbauadditiv und dem elastizitätsverstärkenden Additiv,
**dadurch gekennzeichnet, dass**
➢ das elastizitätsverstärkende Additiv ein elastomerisches Polyolefin-Kopolymer ist, das durchschnittlich pro Polymerkette zwei oder mehrere funktionelle Gruppen, vorzugsweise Anhydrid-, Epoxid-, Corboxyl- oder Hydroxygruppen umfasst;
➢ in einer Menge von 0,3 bis 30 Gew.% verwendet wird; und
➢ die folgenden Eigenschaften aufweist:
- Comonomer-Gehalt von 20% - 40%
- Biegemodul unter 207 MPa
- Biegungstemperatur bei 66 psi (455,4 kPa) unter 38°C und eine Reissdehnung über 300%.

2. Verfahren nach Anspruch 1, worin der Schritt des Mischens und des Knetens unter Bedingungen stattfindet, unter denen zwischen dem thermoplastischen Polyester und dem Kettenaufbauadditiv eine Reaktion stattfindet.

3. Verfahren nach Anspruch 1, worin der Schritt des Mischens und des Knetens unter Bedingungen stattfindet, unter denen zwischen dem thermoplastischen Polyester und dem elastizitätsverstärkenden Additiv eine Reaktion stattfindet.

4. Verfahren nach Anspruch 1, worin der Schritt des Mischens und des Knetens unter Bedingungen stattfindet, unter denen zwischen dem thermoplastischen Polyester und dem Kettehaufbauadditiv und zwischen dem Kettenaufbauadditiv und dem elastizitätsverstärkenden Additiv eine Reaktion stattfindet.

5. Verfahren nach Anspruch 1 - 4, worin das thermoplastische Polyesterharz ein Polyethylen-Terephtalat, ein Kopolymer eines Polyethylenterephtalats, ein Polybutenterephtalat oder ein Gemisch davon ist.

6. Verfahren nach Anspruch 5, wobei als thermoplastische Polyesterharz ein frisches Material, ein teilweise oder ein zu 100 % wiederaufbereitetes Material verwendet wird.

7. Verfahren nach Anspruch 1, 2 oder 4, wobei das verwendete Kettenaufbauadditiv zwei oder mehrere funktionelle Gruppen in einer Menge von 0,05 bis 5 Gew.% umfasst, vorzugsweise Anhydrid, Epoxid- oder Oxazolingruppen.

8. Verfahren nach Anspruch 7, **dadurch gekennzeichnet, dass** das Kettenaufbauadditiv in einer Menge von 0,2 bis 1 Gew.% verwendet wird.

9. Verfahren nach Anspruch 8, wobei das elastomerische Polymer in einer Menge von 2 bis 12 Gew.% verwendet wird.

10. Verfahren nach Anspruch 1, 3 oder 4, wobei das elastomerischen Polyolefin-Kopolymer in einer Menge von 2 bis 12 Gew.% verwendet wird.

11. Verfahren nach Anspruch 1-4, wobei zusätzliche Additive zugegeben werden, vorzugsweise nukleierende Mittel, Stabilisatoren, Pigmente und/oder Schlagzähigkeitsmodifikatoren.

12. Verfahren nach Anspruch 1-4, wobei ein gekömtes Additivpaket verwendet wird, das das Kettenaufbauadditiv und das elastizitätsverstärkende Additiv enthält.

13. Verfahren nach Anspruch 12, wobei ein gekömtes Additivpaket verwendet wird, das das Kettenaufbauadditiv, das elastizitätsverstärkende Additiv und zusätzliche Additive enthält.

14. Verfahren nach Anspruch 12 oder 13, wobei die Additive im gekörnten Additivpaket gleichmässig verteilt sind.

15. Verfahren nach einem der vorhergehenden Ansprüche, wobei der Schritt des Mischens und des Knetens in einem Doppelwellen- oder Mehrwellenextruder (1) ausgeführt wird.

16. Verfahren nach einem der vorhergehenden Ansprüche, wobei das geschmolzene Harz evakuiert wird.

17. Verfahren nach einem der vorhergehenden Ansprüche, wobei das geschmolzene Harz gekühlt, gekörnt und kristallisiert wird.

18. Verfahren nach einem der vorhergehenden Ansprüche, wobei das geschmolzene Harz in einen sekundären Vorgang übertragen wird, vorzugsweise auf einen Schäumungsvorgang.

19. Modifiziertes thermoplastisches Polyesterharz, umfassend:
➢ 55 bis 99,65 Gew.% eines thermoplastischen Polyesterharzes;
➢ 0,05 bis 5 Gew.% eines Kettenaufbauadditives;
➢ 0,3 bis 30 Gew.% eines elastizitätsverstärkenden Additives,
**dadurch gekennzeichnet, dass**
➢ das elastizitätsverstärkende Additiv ein elastomerisches Polyolefin-Kopolymer ist, das durchschnittlich pro Polymerkette zwei oder mehrere funktionelle Gruppen, vorzugsweise Anhydrid-, Epoxid-, Carboxyl- oder Hydroxygruppen umfasst; und
➢ die folgenden Eigenschaften aufweist
- Comonomer-Gehalt von 20% - 40%
- Biegemodul unter 207 MPa
- Biegungstemperatur bei 66 psi (455,4 kPa) unter 38°C und eine Reissdehnung über 300%.

20. Harz nach Anspruch 19, wobei mindestens ein Teil des Kettenaufbauadditives zum thermoplastischen Polyesterharz reagiert.

21. Harz nach Anspruch 19, wobei mindestens ein Teil des elastizitätsverstärkenden Additives zum thermoplastischen Polyesterharz reagiert.

22. Harz nach Anspruch 19, wobei mindestens ein Teil des Kettenaufbauadditives zum thermoplastischen Polyesterharz reagiert und mindestens ein Teil des Kettenaufbauadditives zum elastizitätsverstärkenden Additiv reagiert.

23. Harz nach Anspruch 19-22, wobei das thermoplastische Polyesterharz ein Polyethylenterephtalat, ein Kopolymer eines Polyethylenterephtalats, ein Polybutenterephtalat oder ein Gemisch davon ist.

24. Verfahren nach Anspruch 23, wobei für das thermoplastische Polyesterharz ein frisches Material und/oder ein bis zu 100% wiederaufbereitetes Material verwendet wird.

25. Harz nach Anspruch 19, 20 oder 22, wobei das Kettenaufbauadditiv zwei oder mehrere funktionelle Gruppen umfasst, vorzugsweise Anhydrid, Epoxid- oder Oxazolingruppen, und das in einer Menge von 0,05 bis 5 Gew.% verwendet wird.

26. Harz nach Anspruch 25, wobei das Kettenaufbauadditiv in einer Menge von 0,2 bis 1 Gew.% verwendet wind.

27. Harz nach Anspruch 19. 21 oder 22, wobei das elastizitätsverstärkende Additiv in einer Menge von 2 bis 12 Gew.% verwendet wird.

28. Harz nach Anspruch 19, wobei zusätzliche Additive zugegeben werden, vorzugsweise nukleierende Mittel, Stabilisatoren, Pigmente und/oder Schlagzähigkeitsmodifikatoren.

29. Gegenstände, die aus dem modifizierten thermoplastischen Polyesterharz nach Anspruch 19-28 hergestellt sind, vorzugsweise durch Flachfolienextrusion, Extrusionsschäumung, Extrusionsblasverfahren, Extrusionsfolienblasen und Preformspritzguss.

30. Gegenstände nach Anspruch 29, die eine weisse Farbe infolge der Verwendung des elastizitätsverstärkenden Additives aufweisen.

31. Verfahren zur Herstellung eines modifizierten thermoplastischen Polyesterharzschaumes, umfassend die folgenden Schritte:
➢ Beschicken und Schmelzen eines thermoplastischen Polyesterharzes;
➢ Mischen des Harzes mit einem Treibmittel,
➢ Extrusion des Gemisches in einen Bereich mit niedrigerem Druck, um die Schäumung auszuführen, wobei sowohl ein Kettenaufbauadditiv als auch ein eiastizitätsverstärkendes Additiv dem thermoplastischen Polyester hinzugefügt und mit diesem gemischt und geknetet werden,
**dadurch gekennzeichnet, dass**
➢ das elastizitätsverstärkende Additiv ein elastomerisches Polyolefin-Kopolymer ist, das durchschnittlich pro Polymerkette zwei oder mehrere funktionelle Gruppen, vorzugsweise Anhydrid-, Epoxid-, Carboxyl- oder Hydroxygruppen umfasst; in einer Menge von 0.3 bis 30 Gew.% verwendet wird, und
➢ die folgenden Eigenschaften aufweist:
- Comonomer-Gehalt von 20% - 40%
- Biegemodul unter 207 MPa
- Biegungstemperatur bei 66 psi (455,4 kPa) unter 38°C und eine Reissdehnung über 300%.

32. Verfahren nach Anspruch 31, wobei der Schritt des Mischens und des Knetens unter Bedingungen ausgeführt wird, unter denen zwischen dem thermoplastischen Polyester und dem Kettenaufbauadditiv eine Reaktion stattfindet.

33. Verfahren nach Anspruch 31, wobei der Schritt der Mischens und des Knetens unter Bedingungen ausgeführt wird, unter denen zwischen dem thermoplastischen Polyester und dem elastizitätsverstärkenden Additiv eine Reaktion stattfindet.

34. Verfahren nach Anspruch 31, wobei der Schritt des Mischens und des Knetens unter Bedingungen ausgeführt wird, unter denen zwischen dem thermoplastischen Polyester und dem Kettenaufbauadditiv und zwischen dem Kettenaufauadditiv und dem elastizitätsverstärkenden Additiv eine Reaktion stattfindet.

35. Verfahren nach Anspruch 31-34, wobei das thermoplastische Polyesterharz ein Polyethylenterephtalat, ein Kopolymer eines Polyethylenterephtalats, ein Polybutenterephtalat oder ein Gemisch davon ist.

36. Verfahren nach Anspruch 35, wobei als thermoplastische Polyesterharz ein frisches Material, ein teilweise oder ein bis zu 100% wiederaufbereitetes Material verwendet wird.

37. Verfahren nach Anspruch 31, 32 oder 34, wobei das Kettenaufbauadditiv zwei oder mehrere funktionelle Gruppen umfasst, vorzugsweise Anhydrid, Epoxid-oder Oxazolingruppen, und das in einer Menge von 0,05 bis 5 Gew.% verwendet wird.

38. Verfahren nach Anspruch 37, wobei das Kettenaufbauadditiv vorzugsweise in einer Menge von 0,2 bis 1 Gew.% verwendet wird.

39. Verfahren nach Anspruch 31, 33 oder 34, wobei das elastizitätsverstärkende Additiv in einer Menge von 2 bis 12 Gew.% verwendet wird.

40. Verfahren nach Anspruch 31-34, wobei zusätzliche Additive zugegeben werden, vorzugsweise nukleierende Mittel, Stabilisatoren, Pigmente und/oder Schlagzähigkeitsmodifikatoren.

41. Verfahren nach Anspruch 31-34, wobei ein Treibmittel von geringer Löslichkeit und/oder hoher Diffusionsfähigkeit verwendet wird, vorzugsweise CO₂ oder N₂.

42. Verfahren nach Anspruch 41, wobei das Treibmittel in das geschmolzene Harz injiziert wird.

43. Verfahren nach Anspruch 42, wobei das geschmolzene Harz vor der Injektion des Treibmittels evakuiert wird.

44. Verfahren nach Anspruch 31-43, wobei die Schäumung zu einer hohen Dichtereduktion ausgeführt wird, vorzugsweise mehr als 15 mal.

45. Verfahren nach Anspruch 31-43, wobei die Schäumung zu einer hohen Dichtereduktion ausgeführt wird, vorzugsweise grösser als 25 mal.

46. Verfahren nach Anspruch 31-45, durchgeführt in einen erstem und einem zweiten Extruder (1, 11) oder in einem ersten Extruder (1), verbunden mit einer statischen Mischvorrichtung (14).

47. Verfahren nach Anspruch 46, wobei der erste Extruder (1) ein Doppelwellen- oder Mehrwellenextruder ist.

48. Verfahren nach Anspruch 46, worin eine Übertragungslinie (10) bereitgestellt ist.

49. Gegenstände, die aus modifiziertem thermoplastischem Polyesterharz nach Anspruch 31-48 geschäumt sind.

50. Gegenstände nach Anspruch 49 mit einer Dichte unter 80 kg/m³, insbesondere verwendbar für thermische Isolierungen und Lebensmittelbehälter.

51. Gegenstände nach Anspruch 49, wobei eine Hautschicht auf entweder eine oder auf beide Seiten des geschäumten Gegenstandes laminiert oder koextrudiert ist.

## Claims

1. Process for the production of a modified thermoplastic polyester resin, comprising the
➢ introduction and melting of a thermoplastic polyester resin, the
➢ introduction of a chain-extending additive and the
➢ introduction of an elastifying additive, followed by
➢ mixing and kneading of the thermoplastic polyester resin with the chain-extending additive and the elastifying additive,
**characterized in that**
➢ the elastifying additive comprises an elastomeric polyolefin copolymer which has an average number of two or more functional groups per polymer chain, preference being given to anhydride groups, epoxy groups, carboxy groups or hydroxy groups;
➢ in an amount of from 0.3 to 30% by weight; and
➢ has the following properties:
- comonomer content of from 20% to 40%
- flexural modulus below 207 MPa
- deflection temperature at 66 psi (455.4 kPa) below 38°C and an elongation at break above 300%.

2. Process according to Claim 1, in which the step of mixing and of kneading takes place under conditions under which a reaction takes place between the thermoplastic polyester and the chain-extending additive.

3. Process according to Claim 1, in which the step of mixing and of kneading takes place under conditions under which a reaction takes place between the thermoplastic polyester and the elastifying additive.

4. Process according to Claim 1, in which the step of mixing and of kneading takes place under conditions under which a reaction takes place between the thermoplastic polyester and the chain-extending additive and between the chain-extending additive and the elastifying additive.

5. Process according to any of Claims 1 to 4, in which the thermoplastic polyester resin is a polyethylene terephthalate, a copolymer of a polyethylene terephthalate, or is a polybutene terephthalate or a mixture thereof.

6. Process according to Claim 5, where the thermoplastic polyester resin used comprises a virgin material, or a material that has been to some extent or entirely recycled.

7. Process according to any of Claims 1, 2 and 4, where the chain-extending additive used comprises two or more functional groups in an amount of from 0.05 to 5% by weight, preferably anhydride, epoxy groups or oxazoline groups.

8. Process according to Claim 7, **characterized in that** the amount used of the chain-extending additive is from 0.2 to 1% by weight.

9. Process according to Claim 8, where the amount used of the elastomeric polymer is from 2 to 12% by weight.

10. Process according to any of Claims 1, 3 and 4, where the amount used of the elastomeric polyolefin copolymer is from 2 to 12% by weight.

11. Process according to any of Claims 1 to 4, where additives are also added, preferably nucleating agents, stabilizers, pigments and/or impact modifiers.

12. Process according to any of Claims 1 to 4, where a granulated additive package is used, comprising the chain-extending additive and comprising the elastifying additive.

13. Process according to Claim 12, where a granulated additive package is used, comprising the chain-extending additive and comprising the elastifying additive and also comprising further additives.

14. Process according to Claim 12 or 13, where the additives have uniform distribution in the granulated additive package.

15. Process according to any of the preceding claims, where the step of mixing and of kneading is executed in a twin-screw or multi-screw extruder (1).

16. Process according to any of the preceding claims, where the molten resin is evacuated.

17. Process according to any of the preceding claims, where the molten resin is cooled, granulated and crystallized.

18. Process according to any of the preceding claims, where the molten resin is transferred to a secondary procedure, preferably to a foaming procedure.

19. Modified thermoplastic polyester resin, comprising:
➢ from 55 to 99.65% by weight of a thermoplastic polyester resin;
➢ from 0.05 to 5% by weight of a chain-extending additive;
➢ from 0.3 to 30% by weight of an elastifying additive,
**characterized in that**
➢ the elastifying additive is an elastomeric polyolefin copolymer which has an average number of two or more functional groups per polymer chain, preference being given to anhydride groups, epoxy groups, carboxy groups or hydroxy groups; and
➢ has the following properties:
- comonomer content of from 20% to 40%
- flexural modulus below 207 MPa
- deflection temperature at 66 psi (455.4 kPa) below 38°C and an elongation at break above 300%.

20. Resin according to Claim 19, where at least a portion of the chain-extending additive reacts to give the thermoplastic polyester resin.

21. Resin according to Claim 19, where at least a portion of the elastifying additive reacts to give the thermoplastic polyester resin.

22. Resin according to Claim 19, where at least a portion of the chain-extending additive reacts to give the thermoplastic polyester resin and at least a portion of the chain-extending additive reacts to give the elastifying additive.

23. Resin according to any of Claims 19 to 22, where the thermoplastic polyester resin is a polyethylene terephthalate, a copolymer of a polyethylene terephthalate, or is a polybutene terephthalate or a mixture thereof.

24. Process according to Claim 23, where the thermoplastic polyester resin uses a virgin material, and/or a material that has been partly or entirely recycled.

25. Resin according to Claim 19, 20 or 22, where the chain-extending additive comprises two or more functional groups, preferably anhydride, epoxy groups or oxazoline groups, and is used in an amount of from 0.05 to 5% by weight.

26. Resin according to Claim 25, where the amount used of the chain-extending additive is from 0.2 to 1% by weight.

27. Resin according to Claim 19, 21 or 22, where the amount used of the elastifying additive is from 2 to 12% by weight.

28. Resin according to Claim 19, where additives are also added, preferably nucleating agents, stabilizers, pigments and/or impact modifiers.

29. Articles produced from the modified thermoplastic polyester resin according to any of Claims 19 to 28, preferably via flat-film extrusion, extrusion foaming, extrusion blow moulding, blown film extrusion and preform injection moulding.

30. Articles according to Claim 29, which have a white colour as a consequence of the use of the elastifying additive.

31. Process for the production of a modified thermoplastic polyester resin foam, comprising the following steps:
➢ supply and melting of a thermoplastic polyester resin;
➢ mixing of the resin with a blowing agent,
➢ extrusion of the mixture into a region with relatively low pressure, in order to execute the foaming process, where not only a chain-extending additive but also an elastifying additive is added to the thermoplastic polymer and mixed with the same, and kneaded,
**characterized in that**
➢ the elastifying additive is an elastomeric polyolefin copolymer which has an average number of two or more functional groups per polymer chain, preference being given to anhydride groups, epoxy groups, carboxy groups or hydroxy groups; is used in an amount of from 0.3 to 30% by weight; and
➢ has the following properties:
- comonomer content of from 20% to 40%
- flexural modulus below 207 MPa
- deflection temperature at 66 psi (455.4 kPa) below 38°C and an elongation at break above 300%.

32. Process according to Claim 31, where the step of mixing and of kneading is executed under conditions under which a reaction takes place between the thermoplastic polyester and the chain-extending additive.

33. Process according to Claim 31, in which the step of mixing and of kneading takes place under conditions under which a reaction takes place between the thermoplastic polyester and the elastifying additive.

34. Process according to Claim 31, in which the step of mixing and of kneading takes place under conditions under which a reaction takes place between the thermoplastic polyester and the chain-extending additive and between the chain-extending additive and the elastifying additive.

35. Process according to any of Claims 31 to 34, where the thermoplastic polyester resin is a polyethylene terephthalate, a copolymer of a polyethylene terephthalate, or is a polybutene terephthalate or a mixture thereof.

36. Process according to Claim 35, where the thermoplastic polyester resin used comprises a virgin material, or a material that has been to some extent or entirely recycled.

37. Process according to any of Claims 31, 32 and 34, where the chain-extending additive comprises two or more functional groups, preferably anhydride, epoxy groups or oxazoline groups, and is used in an amount of from 0.05 to 5% by weight.

38. Process according to Claim 37, where the amount used of the chain-extending additive is preferably from 0.2 to 1% by weight.

39. Process according to any of Claims 31, 33 and 34, where the amount used of the elastifying additive is from 2 to 12% by weight.

40. Process according to any of Claims 31 to 34, where additives are also added, preferably nucleating agents, stabilizers, pigments and/or impact modifiers.

41. Process according to any of Claims 31 to 34, where a blowing agent of low solubility and/or of high diffusivity is used, preferably CO₂ or N₂.

42. Process according to Claim 41, where the blowing agent is injected into the molten resin.

43. Process according to Claim 42, where the molten resin is evacuated prior to the injection of the blowing agent.

44. Process according to any of Claims 31 to 43, where the foaming process is executed to give a large reduction of density, preferably more than 15 times.

45. Process according to any of Claims 31 to 43, where the foaming process is executed to give a large reduction of density, preferably more than 25 times.

46. Process according to any of Claims 31 to 45, carried out in a first and a second extruder (1, 11) or in a first extruder (1), connected to a static mixing apparatus (14).

47. Process according to Claim 46, where the first extruder (1) is a twin-screw or multi-screw extruder.

48. Process according to Claim 46, in which a transfer line (10) has been provided.

49. Articles foamed from modified thermoplastic polyester resin according to any of Claims 31 to 48.

50. Articles according to Claim 49 with density below 80 kg/m³, in particular capable of use for thermal insulation and food containers.

51. Articles according to Claim 49, where a skin layer has been coextruded or laminated onto either one or both sides of the foamed article.

## Revendications

1. Procédé pour la préparation d'une résine de polyester thermoplastique modifiée, comprenant
- l'alimentation et la fusion d'une résine de polyester thermoplastique,
- l'alimentation d'un additif de formation de chaînes et
- l'alimentation d'un additif renforçant l'élasticité, suivies
- du mélange et du malaxage de la résine de polyester thermoplastique avec l'additif de formation de chaînes et l'additif renforçant l'élasticité,
**caractérisé en ce que**
- l'additif renforçant l'élasticité est un copolymère de polyoléfine élastomère, qui présente en moyenne, par chaîne polymère, deux groupes fonctionnels ou plus, de préférence des groupes anhydride, époxyde, carboxyle ou hydroxy;
- est utilisé en une quantité de 0,3 à 30% en poids; et
- présente les propriétés suivantes
- teneur en comonomère de 20%-40%
- module de flexion inférieur à 207 MPa
- température de flexion à 66 psi (455,4 kPa) inférieure à 38°C et allongement à la rupture supérieur à 300%.

2. Procédé selon la revendication 1, où l'étape de mélange et de malaxage a lieu dans des conditions dans lesquelles il se produit une réaction entre le polyester thermoplastique et l'additif de formation de chaînes.

3. Procédé selon la revendication 1, où l'étape de mélange et de malaxage a lieu dans des conditions dans lesquelles il se produit une réaction entre le polyester thermoplastique et l'additif renforçant l'élasticité.

4. Procédé selon la revendication 1, où l'étape de mélange et de malaxage a lieu dans des conditions dans lesquelles il se produit une réaction entre le polyester thermoplastique et l'additif de formation de chaînes et entre l'additif de formation de chaînes et l'additif renforçant l'élasticité.

5. Procédé selon la revendication 1-4, où la résine de polyester thermoplastique est un poly(téréphtalate d'éthylène), un copolymère d'un poly(téréphtalate d'éthylène), un poly(téréphtalate de butène) ou un mélange de ceux-ci.

6. Procédé selon la revendication 5, où on utilise comme résine de polyester thermoplastique un matériau frais, un matériau partiellement recyclé ou recyclé à 100%.

7. Procédé selon la revendication 1, 2 ou 4, où l'additif de formation de chaînes utilisé présente deux groupes fonctionnels ou plus en une quantité de 0,05 à 5% en poids, de préférence des groupes anhydride, époxyde ou oxazoline.

8. Procédé selon la revendication 7, **caractérisé en ce que** l'additif de formation de chaînes est utilisé en une quantité de 0,2 à 1% en poids.

9. Procédé selon la revendication 8, où le polymère élastomère est utilisé en une quantité de 2 à 12% en poids.

10. Procédé selon la revendication 1, 3 ou 4, où le copolymère de polyoléfine élastomère est utilisé en une quantité de 2 à 12% en poids.

11. Procédé selon la revendication 1-4, où des additifs supplémentaires sont ajoutés, de préférence des agents de nucléation, des stabilisateurs, des pigments et/ou des agents de modification de la résilience.

12. Procédé selon la revendication 1-4, où on utilise un compound d'additifs sous forme de granules, qui contient l'additif de formation de chaînes et l'additif renforçant l'élasticité.

13. Procédé selon la revendication 12, où on utilise un compound d'additifs sous forme de granules, qui contient l'additif de formation de chaînes, l'additif renforçant l'élasticité et des additifs supplémentaires.

14. Procédé selon la revendication 12 ou 13, où les additifs sont répartis de manière régulière dans le compound d'additifs sous forme de granules.

15. Procédé selon l'une quelconque des revendications précédentes, où l'étape de mélange et de malaxage est réalisée dans une extrudeuse (1) à deux arbres ou plus.

16. Procédé selon l'une quelconque des revendications précédentes, où la résine fondue est mise sous vide.

17. Procédé selon l'une quelconque des revendications précédentes, où la résine fondue est refroidie, granulée et cristallisée.

18. Procédé selon l'une quelconque des revendications précédentes, où la résine fondue est transférée dans un processus secondaire, de préférence un processus de moussage.

19. Résine de polyester thermoplastique modifiée, comprenant :
- 55 à 99,65% en poids d'une résine de polyester thermoplastique ;
- 0,05 à 5% en poids d'un additif de formation de chaînes ;
- 0,3 à 30% en poids d'un additif renforçant l'élasticité,
**caractérisé en ce que**
- l'additif renforçant l'élasticité est un copolymère de polyoléfine élastomère, qui présente en moyenne, par chaîne polymère, deux groupes fonctionnels ou plus, de préférence des groupes anhydride, époxyde, carboxyle ou hydroxy ; et
- présente les propriétés suivantes
- teneur en comonomère de 20%-40%
- module de flexion inférieur à 207 MPa
- température de flexion à 66 psi (455,4 kPa) inférieure à 38°C et allongement à la rupture supérieur à 300%.

20. Résine selon la revendication 19, où au moins une partie de l'additif de formation de chaînes réagit avec la résine de polyester thermoplastique.

21. Résine selon la revendication 19, où au moins une partie de l'additif renforçant l'élasticité réagit avec la résine de polyester thermoplastique.

22. Résine selon la revendication 19, où au moins une partie de l'additif de formation de chaînes réagit avec la résine de polyester thermoplastique et au moins une partie de l'additif de formation de chaînes réagit avec l'additif renforçant de l'élasticité.

23. Résine selon la revendication 19-22, où la résine de polyester thermoplastique est un poly(téréphtalate d'éthylène), un copolymère d'un poly(téréphtalate d'éthylène), un poly(téréphtalate de butène) ou un mélange de ceux-ci.

24. Procédé selon la revendication 23, où on utilise pour la résine de polyester thermoplastique un matériau frais et/ou un matériau recyclé jusqu'à 100%.

25. Résine selon la revendication 19, 20 ou 22, où l'additif de formation de chaînes comprend deux groupes fonctionnels ou plus, de préférence des groupes anhydride, époxyde ou oxazoline et est utilisé en une quantité de 0,05 à 5% en poids.

26. Résine selon la revendication 25, où l'additif de formation de chaînes est utilisé en une quantité de 0,2 à 1% en poids.

27. Résine selon la revendication 19, 21 ou 22, où l'additif renforçant l'élasticité est utilisé en une quantité de 2 à 12% en poids.

28. Résine selon la revendication 19, où des additifs supplémentaires sont ajoutés, de préférence des agents de nucléation, des stabilisateurs, des pigments et/ou des agents de modification de la résilience.

29. Objets, qui sont fabriqués à partir de la résine de polyester thermoplastique modifiée selon la revendication 19-28, de préférence par extrusion de feuilles plates, par extrusion-moussage, des procédés d'extrusion-soufflage, par extrusion de feuilles-soufflage ou par un moulage par injection de préformes.

30. Objets selon la revendication 29, qui présentent une couleur blanche suite à l'utilisation de l'additif renforçant l'élasticité.

31. Procédé pour la préparation d'une mousse de résine de polyester thermoplastique modifiée, comprenant les étapes suivantes :
- alimentation et fusion d'une résine de polyester thermoplastique,
- mélange de la résine avec l'agent gonflant,
- extrusion du mélange dans une zone de basse pression, pour réaliser le moussage, où on ajoute un additif de formation de chaînes ainsi qu'un additif renforçant l'élasticité au polyester thermoplastique et on les mélange et malaxe avec celui-ci,
**caractérisé en ce que**
- l'additif renforçant l'élasticité est un copolymère de polyoléfine élastomère, qui présente en moyenne, par chaîne polymère, deux groupes fonctionnels ou plus, de préférence des groupes anhydride, époxyde, carboxyle ou hydroxy ; est utilisé en une quantité de 0,3 à 30% en poids ; et
- présente les propriétés suivantes :
- teneur en comonomère de 20%-40%
- module de flexion inférieur à 207 MPa
- température de flexion à 66 psi (455,4 kPa) inférieure à 38°C et allongement à la rupture supérieur à 300%.

32. Procédé selon la revendication 31, où l'étape de mélange et de malaxage est réalisée dans des conditions dans lesquelles il se produit une réaction entre le polyester thermoplastique et l'additif de formation de chaînes.

33. Procédé selon la revendication 31, où l'étape de mélange et de malaxage est réalisée dans des conditions dans lesquelles il se produit une réaction entre le polyester thermoplastique et l'additif renforçant l'élasticité.

34. Procédé selon la revendication 31, où l'étape de mélange et de malaxage est réalisée dans des conditions dans lesquelles il se produit une réaction entre le polyester thermoplastique et l'additif de formation de chaînes et entre l'additif de formation de chaînes et l'additif renforçant l'élasticité.

35. Procédé selon la revendication 31-34, où la résine de polyester thermoplastique est un poly(téréphtalate d'éthylène), un copolymère d'un poly(téréphtalate d'éthylène), un poly(téréphtalate de butène) ou un mélange de ceux-ci.

36. Procédé selon la revendication 35, où on utilise comme résine de polyester thermoplastique un matériau frais, un matériau partiellement recyclé ou recyclé jusqu'à 100%.

37. Procédé selon la revendication 31, 32 ou 34, où l'additif de formation de chaînes comprend deux groupes fonctionnels ou plus, de préférence des groupes anhydride, époxyde ou oxazoline et est utilisé en une quantité de 0,05 à 5% en poids.

38. Procédé selon la revendication 37, où l'additif de formation de chaînes est de préférence utilisé en une quantité de 0,2 à 1% en poids.

39. Procédé selon la revendication 31, 33 ou 34, où l'additif renforçant l'élasticité est utilisé en une quantité de 2 à 12% en poids.

40. Procédé selon la revendication 31-34, où des additifs supplémentaires sont ajoutés, de préférence des agents de nucléation, des stabilisateurs, des pigments et/ou des agents de modification de la résilience.

41. Procédé selon la revendication 31-34, où on utilise un agent gonflant de faible solubilité et/ou d'aptitude élevée à la diffusion, de préférence le CO₂ ou le N₂.

42. Procédé selon la revendication 41, où l'agent gonflant est injecté dans la résine fondue.

43. Procédé selon la revendication 42, où la résine fondue est mise sous vide avant l'injection de l'agent gonflant.

44. Procédé selon la revendication 31-43, où le moussage est réalisé jusqu'à une réduction élevée de la densité, de préférence de plus de 15 fois.

45. Procédé selon la revendication 31-43, où le moussage est réalisé jusqu'à une réduction élevée de la densité, de préférence de plus de 25 fois.

46. Procédé selon la revendication 31-45, réalisé dans une première et une deuxième extrudeuse (1, 11) ou dans une première extrudeuse (1), associée à un dispositif de mélange statique (14).

47. Procédé selon la revendication 46, où la première extrudeuse (1) est une extrudeuse à deux arbres ou plus.

48. Procédé selon la revendication 46, dans lequel une ligne de transfert (10) est mise à disposition.

49. Objets moussés à partir de la résine de polyester thermoplastique modifiée selon la revendication 31-48.

50. Objets selon la revendication 49 présentant une densité inférieure à 80 kg/m³, en particulier utilisables pour les isolations thermiques et les conteneurs à aliments.

51. Objets selon la revendication 49, où une couche formant une peau est laminée ou coextrudée sur une face ou les deux faces de l'objet moussé.
